# EUROPEAN PATENT APPLICATION

(11) **EP 4 342 854 A1**
(43) Date of publication of application: **27.03.2024**
(21) Application number: 23189534.3
(22) Date of filing: 03.08.2023
(51) Int. Cl.: C02F 3/34, C02F 11/02, C02F 11/121, C02F 11/00, C02F 103/20, C05F 3/00

(54) **TREATMENT OF ANIMAL WASTE**

(30) Priority: 03.08.2022 GB 202211337
(71) Applicant: Pruex Limited, Llanelli SA14 7HU (GB)
(72) Inventor: DAVIES, Aled Rhys, Carmarthenshire (GB)
(74) Representative: Dehns

(57) **Abstract**

A method of treatment of animal waste is disclosed. The method comprises collecting the animal waste, placing the animal waste in a storage location, and periodically or continuously applying a treatment composition to the animal waste. The treatment composition comprises a probiotic, and the probiotic comprises at least one non-pathogenic species of Bacteria.

## Description

This invention relates to the treatment of animal waste, and in particular to a method of treatment that produces a useful end product.

It is known that animal waste, and in particular animal waste generated in medium or high density animal husbandry, can be polluting and / or toxic to the environment, the animals producing the waste and humans working with those animals.

The polluting nature of such waste includes nutrient pollution if the waste is improperly stored or introduced in the environment, for example by spreading the waste on the land. Nutrient pollution is, in general terms, caused by excess nitrogen and phosphorus in water systems such as ground water, streams, rivers and the sea. The excess nitrogen and phosphorus can either enter the water system directly, for example through a failure of a storage facility or a flooding event, or by leaching out of the soil to which the waste has been applied. That excess of nitrogen and phosphorus in the water causes algae to grow faster than ecosystems can handle. This leads to significant increases in algae which causes harm to water quality, food resources and habitats, by decreasing or removing dissolved oxygen from the water. This can mean that fish and other aquatic life are killed because there is not sufficient oxygen in the water for them to survive. Furthermore, large growths of algae (often referred to as algal blooms) can be harmful to humans because they produce elevated toxins and bacterial growth that can make people sick if they directly come into contact or ingest that polluted water, or encounter it indirectly, for example by the consumption of plant or animal life from that polluted water.

Excess nitrogen originating from animal waste can also produce airborne pollutants such as ammonia and ozone. These gasses can impair human and animal ability to breathe and limit visibility. They can also adversely affect plant growth.

The animal waste can also prove toxic in that such waste can be host to pathogenic bacteria and microorganisms such as *escherichia coli,* salmonella, *staphylococcus aureus, candida albicans* and *pseudomonas aeruginosa.* Such microorganisms can, if for example spread on a field, transfer to humans, animals or plants and lead to sickness and, in extreme cases death.

According to a first aspect of the present invention there is provided a method of treatment of animal waste, in which the method comprises collecting the animal waste, placing the animal waste in a storage location, and periodically applying a treatment composition to the animal waste, in which the treatment composition comprises a probiotic, and the probiotic comprises at least one non-pathogenic species of Bacteria.

According to a second aspect of the present invention there is provided a method of manufacture of a fibrous material from animal waste, in which the method comprises collecting the animal waste, mechanically dewatering the animal waste to provide a fibrous material and a liquid, placing the fibrous material in a storage location, and periodically or continuously applying a treatment composition to the fibrous material, in which the treatment composition comprises a probiotic, and the probiotic comprises at least one non-pathogenic species of Bacteria.

For the purposes of the description of the present invention it is to be understood that animal waste references a material which is a mixture which includes at least animal and / or human faeces and urine. The material may have at the time of collection or gathering of that material a liquid form, be of a sufficiently low viscosity that the material has little or no structure that would allow the material to be self supporting, or is in the form that it was produced by the animal producing the faeces and urine. The animal waste may further include one or more other organic or inorganic material such as, without limitation, straw, woodchips, sawdust, and / or sand. As will be described further below, the method of the present invention changes the nature of the material relative to the time at which it is gathered but, for clarity the material will be generally described as animal waste or, if appropriate in context, untreated animal waste, partially treated animal waste, and treated animal waste irrespective of how liquid or otherwise the material is at the time that it is being referenced.

In an embodiment of any of the above embodiments, the bacteria are in the form of bacterial spores or endospores.

In some embodiments, all or substantially all of the bacteria are in the from of spores at the time of treatment. In some other embodiments some of the bacteria are spores and some have the form of vegetative cells. In some embodiments at least 50%, at least 60%, at least 70%, at least 80%, at least 90%, or 100% of the at least one non-pathogenic species of Bacteria are in the form of spores.

In an embodiment of any of the above embodiments, the bacterial spoors germinate after application of the treatment composition to the animal waste.

In an embodiment of the above embodiment, the at least one non-pathogenic species of Bacteria comprises at least one non-pathogenic species of the genus *Bacillus.*

In an embodiment of any of the above embodiments, the treatment composition is a liquid.

In an embodiment of any of the above embodiments, the liquid treatment composition is of a low enough viscosity that it is sprayable.

In an embodiment of any of the above embodiments, the liquid treatment composition is of a low enough viscosity that it is sprayable with an average droplet size of less than 1000 µm, less than 500 µm, or less than 300 µm. It is to be understood that average is the mean average unless otherwise stated.

In an embodiment of any of the above embodiments, the application of the treatment composition to the animal waste or fibrous material is by spraying the animal waste or fibrous material with the treatment composition.

In an embodiment of any of the above embodiments, the treatment composition is formed into a mist, and the mist allowed to settle onto the animal waste or fibrous material. In some embodiments the mist has an average droplet size of less than 1000 µm, less than 500 µm, or less than 300 µm.

In an embodiment of the above embodiment the animal waste is slurry generated by animals from the Family *Bovidae* or *Suidae,* for example cows or pigs. Intensive or high density farming of cows and pigs typically involves holding those animals in relatively small, often covered, areas such as cattle sheds for at least part of each day. For example overnight. This leads to the generation of slurry which is principally composed of faeces and urine, in a relatively small area. For example, for cows the slurry production is typically eighteen to twenty litres per day per cow. For the health of the animals, in particular the feet of cows, the slurry is collected or removed from the holding area on a daily basis.

A known technique for disposing of slurry is to store that slurry in a tank or pond until the slurry is spread on agricultural land so that the soil ecosystem subsequently treats the slurry. This can lead to the problems discussed above. Furthermore, for a large herd of cows the storage capacity for the slurry may need to be very large, and hence expensive. Whilst the slurry is being stored the conditions within the slurry are generally anaerobic and can lead to the flourishing of pathogenic bacteria and the generation of greenhouse gasses such as methane and ammonia.

In an embodiment of the above embodiment the animal waste is generated by cattle, sheep, or ponies and / or horses (hereafter collectively referred to as horses) who are held in an enclosure with bedding on the floor. The faeces and urine produced by those animals gets mixed in with the bedding and that mixture is treated using the method of the present invention.

In other embodiments the method of the present invention can be used in connection with other animal waste such as that of human origin. It will be appreciated that the method of the present invention may be used in connection with the treatment of mixtures of faeces and urine of other animals which are not specifically named herein.

The animal waste / slurry contains organic nitrogen (N) in compounds that are not plant available. When exposed to Bacteria and / or other micro-organisms that organic N, as part of the lifecycle of the Bacteria and / or other micro-organisms is converted into various possible inorganic forms of N. Some of those inorganic forms of N are desirable and some not so. The particular forms into which the organic Ni is converted are dependent on the type of Bacteria and / or other micro-organisms performing the conversion.

The Bacteria and / or other micro-organisms of the treatment composition act on the organic N and convert it to inorganic N through the mineralization process. In this process, bacteria digest organic material and release NH₄⁺-N (ammonium-N).

Formation of NH₄⁺-N increases as Bacterial and / or microbial activity increases. The NH₄⁺-N resultant from the mineralization process is the same as the NH₄⁺-N supplied in commercial fertilizers.

Plants can absorb NH₄⁺-N. Also, because the NH₄⁺ has a positive charge, it's attracted or held by negatively charged soil and soil organic matter. This means that the NH₄⁺-N doesn't move downward in soils, and thus does not leach out of the soil.

Nitrogen in the NH₄⁺-N form that isn't taken up by plants may be subject to further conversion by bacterial / microbiological action such as nitrification which is the conversion of NH₄⁺ (ammonium) to NO₂⁻ (nitrite) and then to NO₃⁻ (nitrate). Each of ammonium, nitrite, and nitrate are plant available. Nitrate is the most plant available but also the most easily leached out of the soil.

The high level of Bacteria and / or other micro-organisms from the treatment composition also has the effect of minimizing the amount of other Bacteria in the animal waste as a result of competitive exclusion and quorum sensing amongst the Bacteria. Those other Bacteria include denitrifying Bacteria which use NO₃⁻-N instead of oxygen in their metabolic processes. In denitrification, bacteria convert NO₃⁻-N to N gases such As NH₃ (ammonia) that are lost to the atmosphere. The NO₃⁻-N is formed as part of the conversion of urea to NH₄⁺-N.

In addition to the conversion of organic N to inorganic N, the growth of the Bacteria of the treatment composition in the animal waste / slurry has the effect that at the end of the method of treatment of the animal waste the fully treated animal waste contains high levels of Bacteria. Those Bacteria are a food source in the soil food chain. This assists in maintaining a healthy soil ecosystem.

With regard to phosphorus, animal waste / slurry contains organic phosphorus (P) in compounds or in organic form that are not plant available. When exposed to Bacteria and / or other micro-organisms that organic phosphorus, as part of the lifecycle of the Bacteria and / or other micro-organisms is converted into the inorganic form of phosphorus that is known as plant available or soil solution phosphorus. In particular, the Bacteria use phosphorus in the synthesis of Adenosine triphosphate (ATP) from adenosine diphosphate (ADP) during metabolic processes within the Bacteria.

When untreated slurry is to be spread on the land, there is often a legal and practical maximum quantity of slurry that can be spread per unit area of land. The practical maximum is the quantity that does not simply kill off the plant and soil ecosystem that is intended to treat the slurry and convert it into a less polluting / toxic material than the slurry. The legal maximum may set by the appropriate authority that oversees the land on which the slurry is to be spread. These maximums can result in the party who is trying to dispose of the slurry, for example a farmer, needing a significantly greater area of land for spreading slurry on than they need for the keeping of the animals that produce the slurry.

It is also a known technique for the treatment of slurry to separate the solids / fibrous material in the slurry from the liquids and then to treat the two separately. This is generally performed by mechanical means. A method of treatment of the liquid is to use reed beds and hold the liquid in the reed beds until such time as the ecosystem in the reed bed has sufficiently acted on the liquid that the liquid is no longer polluting or toxic. This approach can be energy intensive at the separation stage and land intensive for the creation of reed beds. The risk of failure of the reed bed with the above discussed potential problems is also present.

The separated solids / fibrous material may be composted or, once sufficiently dried may be burnt as biomass in a heat or energy production burner.

It is known that composting the separated solids / fibrous material, or composting the animal waste directly, is time consuming and can lead to the generation of high quantities of pathogenic Bacteria and fungi within the composting material. If that composting occurs near animals the health of those animals can be adversely affected. This can require the use of antibiotics to restore their health. This is generally undesirable.

It has been found that the treatment of the animal waste or fibrous material by the method of the present invention causes the competitive exclusion of pathogenic bacteria and microorganisms in the animal waste or fibrous material by the at least one non-pathogenic Bacteria, for example the at least one non-pathogenic species of the genus *Bacillus* that is applied to the animal waste or fibrous material. This is advantageous because it reduces the toxic load within the animal waste or fibrous material.

The treatment also leads to aerobic conditions within the animal waste or fibrous material.

As discussed above, further advantage is that the growth of the Bacteria from the treatment composition is that, in general terms, those Bacteria ingest and incorporate nitrogen and phosphorus into their structures. This is particularly so when the bacterial are applied as spore and they germinate once applied to the animal waste because in such circumstances the need the nitrogen and phosphorous to form the vegetative cells. That incorporated nitrogen and phosphorus is significantly more bioavailable to the soil ecosystem and plants, and is much less likely to leach out of the soil than the nitrogen and phosphorus in animal waste or fibrous material that has not been treated by the method of the present invention when it is applied to the soil.

A further advantage is that the Bacteria grow and multiply in the animal waste or fibrous material, and as a result are present in the treated animal waste or fibrous material when treatment is complete. Those Bacteria act as a food source at the base of the soil and plant ecosystem with the result that spreading the treated animal waste or fibrous material onto the soil assists in encouraging the local ecosystem to flourish by the provision of food which can lead to members of the ecosystem higher than the Bacteria flourishing and leading to improved soil quality and structure. This will increase the resistance of crops or other plants grown on the soil to pests and diseases. It will also improve the water retention characteristics of the soil. This can assist in prevention or minimization of flooding in high rainfall events.

In an embodiment of any of the above embodiments, the probiotic component comprises one or more of at least one non-pathogenic species of the genus *Bacillus,* Lactic Acid Bacteria, soil Bacteria, water Bacteria, human microbiome Bacteria and plant Bacteria and / or the spores of one or more of at least one non-pathogenic species of the genus *Bacillus,* Lactic Acid Bacteria, soil Bacteria, water Bacteria, human microbiome Bacteria and plant Bacteria. The use of spoors is advantageous because they are stable and have a sufficiently long shelf life of at least two years for a product containing such spoors to be commercially viable. A further advantage is that the germination of the spoors into vegetative cells includes the absorption of nitrogen, phosphorus and water into the cellular structure which is advantageous.

In an embodiment of any of the above embodiments, the total amount of Bacteria or spores in said probiotic component ranges from 1×10⁶ to 1×10¹⁰ cfu per gram of the composition. The unit cfu is colony-forming units.

In an embodiment of any of the above embodiments, the probiotic component comprises at least one non-pathogenic species of the genus *Bacillus,* and one or more of *Lactobacillus, Lactococcus, Bifidobacterium, Azospirillum, Enterobacter, Klebsiella, Pseudomonas, Sphingomonas, Nitrospira, Pedomicrobium, Mycobacterium, Nocardia, Desulfovibrio* and Sulfuricurvum.

In an embodiment of any of the above embodiments, the at least one non-pathogenic species of the genus *Bacillus* comprises one or more of *Bacillus subtilis, Bacillus licheniformis, Bacillus megaterium, Bacillus amyloliquefaciens* and *Bacillus pumilus.*

In an embodiment of any of the above embodiments, the probiotic component comprises a mixture of *Bacillus subtilis, Bacillus licheniformis, Bacillus megaterium, Bacillus amyloliquefaciens.* In some embodiments each of the *Bacillus subtilis, Bacillus licheniformis, Bacillus megaterium,* and *Bacillus amyloliquefaciens* are present in a range of between 10 wt% (dry weight) and 70 wt%(dry weight) of the *Bacillus* present in the probiotic composition. In some embodiments each of the *Bacillus subtilis, Bacillus licheniformis, Bacillus megaterium,* and *Bacillus amyloliquefaciens* are present in a range of between 20 wt% (dry weight) and 30 wt%(dry weight) of the *Bacillus* present in the probiotic composition.

In an embodiment of any of the above embodiments, the method further comprises periodically applying a prebiotic component to the animal waste or fibrous material, and the prebiotic component comprises one or more prebiotic compositions. The or each prebiotic composition increases the speed of germination and /or activity of the probiotic component.

In an embodiment of any of the above embodiments, the treatment composition further comprises a prebiotic component, and the prebiotic component comprises one or more prebiotic compositions. The or each prebiotic composition increases the speed of germination and /or activity of the probiotic component.

In an embodiment of any of the above embodiments, the one or more prebiotic compositions comprise at least one of a fructo-oligosaccharide, a galacto-oligosaccharide and/or inulin.

In an embodiment of any of the above embodiments, prebiotic composition is present in a dry weight concentration of between 100 mg and 100 g per kg of treatment composition.

In an embodiment of any of the above embodiments, the treatment composition is a solution comprising a probiotic component, a prebiotic component, and a liquid. In some embodiments the liquid is water.

In an embodiment of any of the above embodiments, the method further comprises aerating the animal waste or fibrous material.

In some embodiments, the aeration may be performed physically by stirring, turning over, mixing, agitating or otherwise physically disrupting the animal waste or fibrous material. The physical aeration my be performed manually, mechanically, for example by a digger, or by moving the animal waste or fibrous material around so that it falls from a first location to a second location under the influence of gravity.

In some embodiments the aeration my be performed pneumatically by pumping air into the animal waste or fibrous material. This may occur via a plurality of nozzles.

In an embodiment of any of the above embodiments, the aeration of the animal waste or fibrous material may be continuous.

In an embodiment of any of the above embodiments, the aeration of the animal waste or fibrous material may be performed periodically.

In an embodiment of any of the above embodiments, the aeration may be performed at the same time as or shortly after the application of the treatment composition to the animal waste or fibrous material. This has the advantage of helping to incorporate the treatment composition into the animal waste or fibrous material.

An advantage of the method of the present invention is that it has been found that when the Bacteria metabolize within the animal waste or fibrous material they emit water vapour. This, in addition to the absorption of water in the germination of bacterial spoors in the treatment composition, has the effect of dewatering the animal waste or fibrous material. As a result of the dewatering that occurs as the treatment of the animal waste or fibrous material progresses, the treated animal waste or fibrous material at the end of the treatment is substantially dryer than the untreated animal waste or fibrous material and may be handled and stored as dry matter. For example the treated animal waste or fibrous material may be placed and stored in sacks or other suitable dry matter holders and stacked for storage. In this format the treated animal waste or fibrous material may be significantly safer than the untreated animal waste such as slurry or fibrous material, for example nothing can fall in it and drown.

In an embodiment of any of the above embodiments, the method further comprises capturing at least a part of that water vapour. This is advantageous because water vapour may be classified as a greenhouse gas and as such emission of water vapour may controlled by greenhouse gas emission regulations. Capturing at least part of the water vapour will thus reduce green house gas emissions.

In an embodiment of any of the above embodiments, the capturing of the water vapour is performed by causing the water vapour to condense.

A advantage of capturing the water vapour is that because the water in the water vapour leaves the animal waste or fibrous material in vapour form, it is not biologically or chemically contaminated. In some embodiments the means for capturing the water vapour are so located and constructed that the captured water vapour remains uncontaminated. That captured water may be used for irrigation, watering the animals that gave rise to the animal waste, or released into the environment without further treatment. This is both ecologically and economically desirable.

In an embodiment of any of the above embodiments, the method of treatment of the animal waste or fibrous material is wholly or substantively performed in an enclosed space. In some embodiments the enclosed space is a building.

In an embodiment of any of the above embodiments, the enclosed space may be provided with a forced ventilation system and the water vapour captured from the air leaving the enclosed space.

This use of an enclosed space is advantageous because it allows considerable control of the conditions in which the treatment process occurs. In particular it allows monitoring and or control of one or more aspects of the method of treatment and the animal waste or fibrous material without significant interference from local climatic conditions. For example the temperature at which the treatment occurs. A further advantage is the ability to capture water vapour and any other by-products of the method of treatment and not allowing the captured materials to be indiscriminately released to the environment.

In an embodiment of any of the above embodiments, the method further comprises at least one application of the treatment composition or at least the probiotic component to the animal waste before the collection of that animal waste.

In an embodiment of any of the above embodiments, the method further comprises periodic application of the treatment composition or at least the probiotic component to the animal waste before the collection of that animal waste.

In an embodiment of any of the above embodiments, the treatment composition or at least the probiotic component thereof is applied to the animal waste before or as it is being collected in or removed from the location where it has been deposited by the animals.

This is advantageous because it both starts the treatment of the waste at an early time and helps the treatment composition or at least the probiotic component to be mixed into the animal waste when the animal waste is collected.

In an embodiment of any of the above embodiments, the treatment composition or at least the probiotic component is applied to the animal waste in the area in which it is being generated by a fixed spray system. For example if the animal waste is being generated in a cattle shed the treatment composition or at least the probiotic component is sprayed from a spray system in the roof of the cattle shed.

Such an application system is advantageous because it has been found that in addition to the commencement of the treatment of the animal waste the treatment composition or at least the probiotic component will also act on the whole of the environment within the shed. This has the effect of minimizing pathogenic bacteria and, in particular, the generation of gaseous ammonia in the environment in which the cattle are at least partially living. This improves the general health of the cattle and reduces the number of medical, and in particular antibiotic, treatments the cattle require. This is beneficial for animal welfare but also in reducing antibiotic use, and saving the cost of medical treatments.

In an embodiment of any of the above embodiments, the method further comprises provision of at least one source of drinking water for the animals when they are in the location in which they produce the animal waste, introducing a drinking treatment composition into the drinking water for the animals, the drinking treatment composition comprises a probiotic, and the probiotic comprises at least one non-pathogenic species of Bacteria.

In an embodiment of any of the above embodiments, the drinking treatment composition is the same as the treatment composition.

In an embodiment of any of the above embodiments, the drinking treatment composition has a different formulation to the treatment composition. In such embodiments reference to the constituents of the treatment composition may alternatively or additionally be reference to the drinking treatment composition.

It is a further advantage of the present invention that the Bacteria in the treatment composition of the present invention are all food grade (meaning allowed for human consumption) Bacteria. They are, classified as Biosafety level 1 by the American Type Culture Collection (ATCC). Further, the Bacteria in the treatment composition of the present invention are all on the European Food Safety Authority (EFSA) Qualified Presumption of Safety (QPS) list. As a result it is recognized that exposure to, inhalation of or ingestion of these Bacteria by humans and animals is harmless to those humans and animals. Thus the method of the present invention is beneficial because there is no use of chemicals that are detrimental to the wellbeing of humans or animals and no need for the use of safety equipment.

In an embodiment of any of the above embodiments, the treatment composition or at least the probiotic component is applied to the surface, for example a cattle shed floor, onto which the animals will deposit the animal waste after the previous animal waste has been collected and before the animals are returned to that surface. The Bacteria then start acting on the animal waste as soon as it is created.

An advantage of treating the animal waste with the treatment composition or at least the probiotic component as soon as it is produced, that is as soon as the animal waste lands on the surface to which the treatment composition or at least the probiotic component has been applied, is that the Bacteria from the probiotic component will rapidly start to compete with any pathogenic Bacteria in the animal waste or on the surface. This will, over the course of time, steadily reduce the activity of the pathogenic Bacteria and as such reduce the emission of gaseous ammonia relative to the expected emission of ammonia if the probiotic component had not been applied and the pathogenic bacteria faced little competition. The reduction of the emission of gaseous ammonia is beneficial because gaseous ammonia is detrimental to animal and human health. Reducing the exposure of the animals to the ammonia will increase their health and decrease the need for medical treatment, for example the use of antibiotics.

In an embodiment of any of the above embodiments, the treatment composition is a liquid.

In an embodiment of any of the above embodiments, the treatment composition is formed into at least one spray or mist for application to the animal waste.

In an embodiment of any of the above embodiments, at least one of the at least one spray or mist of the liquid treatment composition has an average droplet size of less than 1000 µm, less than 500 µm, or less than 300 µm.

In an embodiment of any of the above embodiments, the method comprises periodically applying a treatment composition to the animal waste, and the period between each application of the treatment composition is up to 24 hours.

In an embodiment of any of the above embodiments, each period between application of the treatment composition to the animal waste is the same or approximately the same. In some embodiments the periods are one of 6 hours, 8 hours, 12 hours or 24 hours.

In an embodiment of any of the above embodiments, the length of the periods between application of the treatment composition to the animal waste are not all the same or approximately the same. In some embodiments the period between applications of treatment composition are shorter between 08:00 and 20:00 in the day that in the period between 20:00 and 08:00 the next day.

In an embodiment of any of the above embodiments, the treatment is concluded when the treated animal waste or fibrous material meets one or more predetermined criteria.

In an embodiment of any of the above embodiments, the method further comprises the provision of a plurality of storage locations, the animal waste collected or fibrous material produced in a first period of time is placed in a first storage location, the animal waste collected or fibrous material produced in a second period of time is placed in a second storage location, and the animal waste collected or fibrous material produced in each subsequent period is placed in a subsequent storage location, and there are provided sufficient storage locations that when the final storage location is filled with the most recently collected animal waste or fibrous material produced the treated animal waste or fibrous material in the first or least recently filled storage location meets a predetermined criteria.

In an embodiment of any of the above embodiments, the predetermined criteria is one or more of
- the period for which the animal waste has been treated,
- the waste having a dry solids content of one of at least 50% by weight (wt%), at least 60 wt%, at least 70 wt%, or at least 80 wt%,
- the mass of a predetermined volume of animal waste being below a predetermined level (this is a rough guide to the dry solids content),
- the reduction of volume of the animal waste or fibrous material relative to its initial volume is one of at least 50%, at least 60% or at least 70% (this is a rough guide to the level of dewatering of the animal waste or fibrous material - the level of dewatering is closely related to the activity of the Bacteria and any other microorganisms in the probiotic component in the treatment composition),
- the reduction in the level of emission of one or both of ammonia and carbon dioxide from the animal waste relative to a measured value at the start of the treatment of the animal waste when the animal waste is treated before or when it is collected,
- the reduction in the level of emission of one or both of ammonia and carbon dioxide from the animal waste or fibrous material relative to a measured value when the animal waste or fibrous material is placed in the storage location,
- the absolute level of emission of one or both of ammonia and carbon dioxide from the animal waste or fibrous material,
- the bioavailability of nitrogen in the treated animal waste or fibrous material, and
- the bioavailability of phosphorus in the treated animal waste or fibrous material.

This is advantageous because the least recently filled storage location may be emptied and the treated animal waste or fibrous material stored or used as required. This allows that storage space to be refilled and the treatment process stared again in that storage location.

In an embodiment of any of the above embodiments, the method is performed in an enclosed space. In some embodiments the enclosed space is a building. That space or building may be sufficiently sized that, for example, eight or ten storage locations may be located in the space or building.

In an embodiment of any of the above embodiments, each of the storage locations may be of a sufficient size that they may hold the animal waste produced by the animals or fibrous material produced in a predetermined period, for example a 24 hour period. For example, if the animals producing the animal waste are cows and the heard of cows is formed of one hundred cows, each storage location may have a storage capacity of 2000 litres (2 m³) or more. Alternatively expressed, each storage location has a storage capacity of 100% or more of the expected animal waste production or fibrous material produced in a predetermined period. In some embodiments each storage location has a storage capacity of one of 100%, 120%, 140%, 160%, 180% or 200% of the expected animal waste production or fibrous material produced in a predetermined period

In some embodiments the storage locations may be of a sufficient size that they may hold the animal waste produced by the animals or fibrous material produced in the predetermined period with the animal waste or fibrous material having a maximum average depth of 60 cm, 50 cm, 40 cm, 30 cm, 20 cm or 10 cm.

In an embodiment of any of the above embodiments, each of the storage locations is configured to contain predetermined volume of animal waste or fibrous material at a predetermined maximum average depth. In such an embodiment the method of treatment comprises sequentially filling each storage location until the maximum volume of animal waste or fibrous material has been placed in that storage location. Thereafter the next storage location is filled.

In some embodiments each of the storage locations is configured to contain a maximum volume of animal waste or fibrous material of one of 2 m³, 3 m³, 4 m³, or 5 m³, with a maximum average depth of 60 cm, 50 cm, 40 cm, 30 cm, 20 cm or 10 cm.

In an embodiment of any of the above embodiments, the method includes calculating the expected period of time that a given volume of animal waste or fibrous material will need to be treated until the treated animal waste or fibrous material meets one or more predetermined criteria, calculating the volume of animal waste or fibrous material expected to be generated to be treated per given period of time, and determining the required number of storage locations and the required volume of each storage location so that filling the storage locations in sequence will have the effect that the animal waste or fibrous material in the least recently filled storage location will meet the one or more predetermined criteria by the time that the last of the storage locations has been filled. This means that least recently filled storage location can be emptied to make space for the next animal waste or fibrous material that needs to be treated.

In an embodiment of any of the above embodiments, the treatment performed by the method of treatment is one or more of dewatering the animal waste or fibrous material, fixation of nitrogen in the animal waste or fibrous material, solubilization of phosphorus in the animal waste or fibrous material, and the reduction of pathogenic Bacteria in the animal waste or fibrous material.

According to a third aspect of the present invention there is provided a treatment structure suitable for the performance of the method of the first and second aspects of the present invention. The structure comprises one or more storage locations, and a treatment composition distribution means. The or each storage location defines a storage volume, and each storage volume is configured to hold a volume of animal waste or fibrous material. The treatment composition distribution means is configured to distribute treatment composition into the storage volume of the or each storage location on a periodic or continuous basis.

In an embodiment of the above embodiment, the treatment composition distribution means is configured to distribute treatment composition into two or more of the storage volumes at the same or substantially the same time.

In an embodiment of any of the above embodiments, the treatment composition distribution means is configured to distribute treatment composition into all of the storage volumes at the same or substantially the same time.

In an embodiment of the above embodiment, the treatment composition distribution means is configured to distribute treatment composition into two or more of the storage volumes at different times.

In an embodiment of any of the above embodiments, when a storage location holds or contains animal waste or fibrous material the distribution of treatment composition into the storage volume defined by that storage location includes the treatment composition being applied to one or more outer surfaces of the animal waste or fibrous material. For example, but without limitation, the outer surface of the animal waste or fibrous material may be the uppermost surface of the animal waste or fibrous material and the treatment composition is applied to that surface, for example by letting treatment composition fall on that surface.

In an embodiment of any of the above embodiments, when a storage location holds or contains animal waste or fibrous material the distribution of treatment composition into the storage volume defined by that storage location includes the treatment composition being introduced into the animal waste or fibrous material. For example, but without limitation, the treatment composition could be injected into the animal waste or fibrous material.

In an embodiment of any of the above embodiments, the structure comprises two or more storage locations.

In an embodiment of any of the above embodiments, each storage location is so configured that the maximum average depth of animal waste or fibrous material that can be held in each storage location is one of up to 100 cm, up to 60 cm, up to 50 cm, up to 40 cm, up to 30 cm, up to 20 cm or up to 10 cm. The maximum average depth of the animal waste or fibrous material has an influence on the amount of oxygen in the animal waste or fibrous material and how easily water vapour can escape the animal waste or fibrous material as the treatment method progresses.

In an embodiment of any of the above embodiments, the structure is an enclosed structure. For example a tent or other temporary flexible structure, an underground tank or other structure that defines a sufficiently large volume and which protects the inside of the structure for the environment outside the structure.

In an embodiment of any of the above embodiments, the enclosed structure is a building. For example a barn or other agricultural shed.

In an embodiment of any of the above embodiments, the enclosed structure comprises an air extraction system.

In an embodiment of any of the above embodiments, the air extraction system is configured to dehumidify the air extracted from the structure. This is advantageous because it captures water vapour both for reuse of the water, and to minimize water vapour emissions which may be considered to be greenhouse gas emissions.

In an embodiment of any of the above embodiments, the treatment composition distribution means comprises at least one spray nozzle, at least one spray nozzle is configured to form a spray of the treatment composition, and at least one spray nozzle is so orientated that spray exiting the spray nozzle travels into the storage volume of at least one of the storage locations. In some embodiments the at least one spray nozzle is multidirectional and the spray travels into the storage volume of at least two of the storage locations.

In an embodiment of any of the above embodiments, the treatment composition distribution means comprises at least one mist nozzle, and at least one mist nozzle is configured to form a mist of the treatment composition.

In an embodiment of any of the above embodiments, the at least one mist nozzle is so orientated that the mist created will settle into the storage volume of at least one of the storage locations.

In an embodiment of any of the above embodiments, the at least one mist nozzle is so orientated that the mist created will settle into the storage volume of at least two of the storage locations.

In an embodiment of any of the above embodiments, the at least one mist nozzle is configured to produce a mist which has an average droplet size of less than 1000 µm, less than 500 µm, or less than 300 µm.

In an embodiment of any of the above embodiments, each storage location has a floor, and each nozzle is located vertically less than one of 2.0 m, 1.75 m, 1.5 m, 1.25 m, 1.0 m, 0.75 m or 0.5 m the storage location floor closest to that nozzle. An advantage of such an arrangement is that it minimizes the distance of travel of the treatment composition from the treatment composition distribution system to the storage volume. This can avoid or minimize any external influences on the treatment composition as it travels between the nozzle and the storage volume.

In an embodiment of any of the above embodiments, all of the floors for the storage locations are at substantially the same level as each other.

In an embodiment of any of the above embodiments, the storage volume defined by at least one storage location is defined by a base and one or more side walls, and the vertically uppermost edge or edges of the side wall or walls define an open mouth that faces vertically uppermost. Such a storage location may be termed an open tank and the storage volume is the space within the open tank.

In an embodiment of any of the above embodiments, the treatment composition distribution means is so configured that treatment composition may be independently distributed to the storage locations.

In an embodiment of any of the above embodiments, the structure further comprises at least one sensor, and each sensor is configured to detect at least one environmental characteristic at the position of the sensor.

In an embodiment of any of the above embodiments, the at least one environmental characteristic is one or more of atmospheric ammonia concentration, atmospheric carbon dioxide concentration, atmospheric methane concentration, humidity, and temperature. For example the at least one environmental characteristic is an atmospheric ammonia concentration of 25 ppm (parts per million).

In an embodiment of any of the above embodiments, the structure further comprises a communications system, in which the communications system is in communication with each sensor, the communications system being configured to send a message to at least one destination, and the message relates to at least one environmental characteristic detected one or more sensors. In some embodiments the destination is a mobile telephone or a computer. A computer may be, but is not limited to, a desktop computer, a laptop computer, or a tablet computer.

In an embodiment of any of the above embodiments, each sensor is configured to send a message or signal to at least one destination, and the message or signal relates to at least one environmental characteristic detected by one or more of the sensors. In some embodiments the destination is a mobile telephone or a computer. A computer may be, but is not limited to, a desktop computer, a laptop computer, or a tablet computer.

In an embodiment of any of the above embodiments, the message may be sent by the short message service (SMS), email via an internet or intranet, or via a wireless network.

In an embodiment of any of the above embodiments, the message is sent to a user's user interface or destination, and the user can, on the basis of the message, decide whether to change any aspect of the method of treatment, for example to increase or decrease the quantity of treatment composition applied to the animal waste or fibrous material, and / or to increase or decrease the period between each application of the treatment composition to the animal waste or fibrous material.

In an embodiment of any of the above embodiments, the structure further comprises a controller, and the controller is configured to control the operation of the treatment composition distribution system. In some embodiments the operation controlled is one or more of turning the treatment composition distribution system on and off, the period over which the treatment composition distribution system is turned on, and which part of the treatment composition distribution system is turned off and on if the treatment composition distribution system is configured to have different operational states in different parts of the treatment composition distribution system.

In an embodiment of any of the above embodiments, the controller is in communication with each sensor, and the control of the operation of the treatment composition distribution system is at least partially in response to the environmental characteristics detected by at least one sensor.

In an embodiment of any of the above embodiments, the structure further comprises at least one aerator, and at least one aerator is configured to be able to aerate animal waste or fibrous material held in at least one storage volume.

In an embodiment of any of the above embodiments, at least one aerator is a mechanical means configured to disturb the animal waste or fibrous material. The disturbance is a physical rearrangement of individual parts or volumes within the animal waste or fibrous material relative to each other. This can be achieved, for example and without limiting the scope of the present invention, by stirring the animal waste or fibrous material, drawing one or more physical structures through the animal waste or fibrous material, or lifting and then dropping parts of the animal waste or fibrous material. The aerator may be in a fixed physical relationship to a storage location or may be moved between storage locations.

In an embodiment of any of the above embodiments, at least one aerator comprises a compressed air supply system which includes at least one air nozzle that is configured to release air from the compressed air supply system into animal waste or fibrous material in at least one storage volume.

In an embodiment of any of the above embodiments, the compressed air supply system is substantially wholly integrated into the structure. In such embodiments the compressed air supply includes one or more air lines that are built into the structure, and one or more air nozzles each of which opens into a storage volume. In some embodiments the air nozzles are integral with the floor or base of the storage volume so that air released from the air nozzle can rise through the animal waste or fibrous material.

In an embodiment of any of the above embodiments, the compressed air supply system is partially integrated into the structure. In such embodiments the compressed air supply includes one or more air lines that are movable within the structure, and one or more air nozzles at the end of each air line. The nozzles can be inserted into the animal waste or fibrous material so as to introduce air into the animal waste or fibrous material.

According to a fourth aspect of the present invention there is provided a method of manufacture of a solid fertilizer for use in increasing the fertility of a plant growth medium. That method comprises treating animal waste or fibrous material according to the method of the first or second aspect of the present invention.

According to a fifth aspect of the present invention there is provided a method of increasing the fertility of a plant growth medium. That method comprises treating animal waste or fibrous material according to the method of the first or second aspect of the present invention and applying the treated animal waste or fibrous material to the plant growth medium.

In an embodiment of any of the above embodiments, the plant growth medium is soil.

According to a sixth aspect of the present invention there is provided a method of manufacture of biomass for the production of heat or electricity. That method comprises treating animal waste or fibrous material according to the method of the first or second aspect of the present invention, and then burning the treated animal waste or fibrous material.

The method of the first, second and fourth to sixth aspects of the present disclosure can include one or more, or all, of the features described above, as appropriate. The structure of the third aspect of the present disclosure can include one or more, or all, of the features or structures described above, as appropriate

The present invention will be further described and explained by way of example with reference to the accompanying drawings in which
Figure 1 shows a schematic view of a farmyard and adjacent sheds in which an embodiment of the method of the present invention is performed;
Figure 2 shows a schematic perspective view of an embodiment of the treatment shed of Figure 1;
Figure 3 shows a schematic plan view of the treatment shed of Figure 2;
Figure 4 shows a schematic perspective view of the treatment shed of Figure 2 with transparent walls and roof;
Figure 5 shows a first schematic detail of a first embodiment of the treatment shed of Figure 2;
Figure 6A shows a second schematic detail of the first embodiment of the treatment shed of Figure 2;
Figure 6B shows a schematic detail of a second embodiment of the treatment shed of Figure 2;
Figure 6c shows a schematic detail of a third embodiment of the treatment shed of Figure 2; and
Figure 7 shows a schematic representation of an embodiment of the method of the present invention.

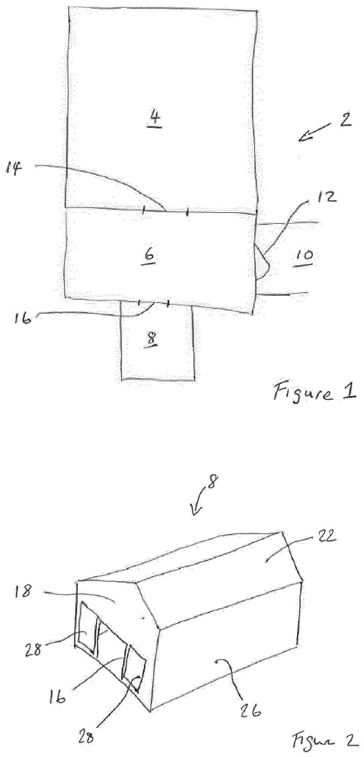

The first aspect of the present invention is described hereafter with reference to Figures 1 to 7 and the animal waste to be treated is slurry.

With reference to Figure 1, a farmyard and adjacent sheds 2 includes a cattle shed 4, a farm yard 6 and a treatment shed 8. The farm yard 6 is accessed along an access track 10 and through a gate 12. The cattle shed 4 includes an access, for example a gated opening, 14 that allows access into the cattle shed 4 from the farm yard 6.

With reference to Figure 2, the treatment shed 8 includes front and back walls 18, 20, and first and second side walls 24, 26. A roof 22 extends between the vertically uppermost edges of the front, back and side walls 18, 20, 24, 26.

The front wall 18 defines a doorway 16 that allows access into the treatment shed 8 from the farm yard 6. The doorway 16 is dimensioned to allow a tractor or a digger to pass through the doorway 16 and to access the inside of the treatment shed 8. The doorway 16 is reversibly closable by a pair of sliding barn doors 28. In other embodiments the doorway 16 is reversibly closed by a roller shutter (not shown). Closing the doors 28 creates an enclosed space within the shed 8.

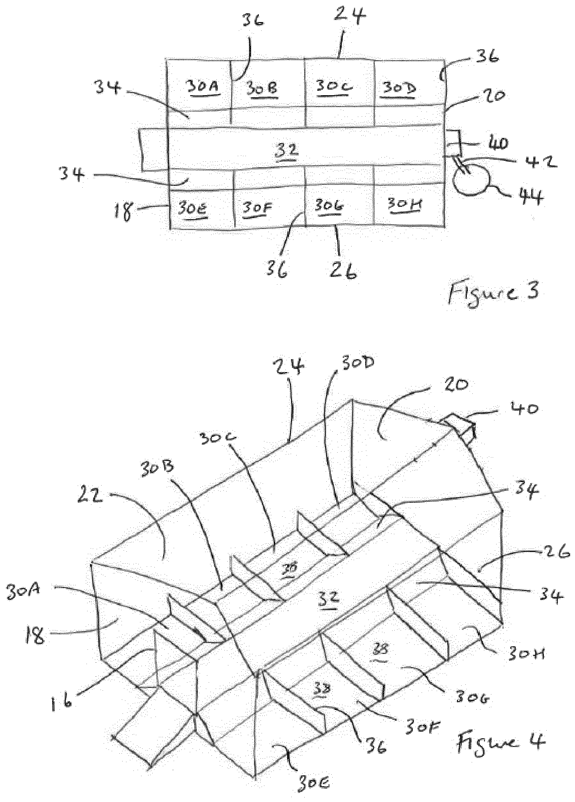

With reference to Figures 3 to 6, within the treatment shed 8 eight animal waste storage locations 30A to 30H. There are four storage locations 30 located either side of a raised platform 32. The raised platform 32 extends in a longitudinal direction from the doorway 16 to the second end wall 20. The vertically uppermost surface of the raised platform 32 is vertically higher than the surface of the floor 38 of each of the storage locations 30A to 30H. For clarity not all of the floors 38 are labelled in Figure 4.

The storage locations 30A to 30H are separated from each other by internal walls 36. The walls 36 are, in the illustrated embodiment, so dimensioned that the vertically uppermost surface of the walls 36 is at around the same vertical level as the vertically uppermost surface of the raised platform 32.

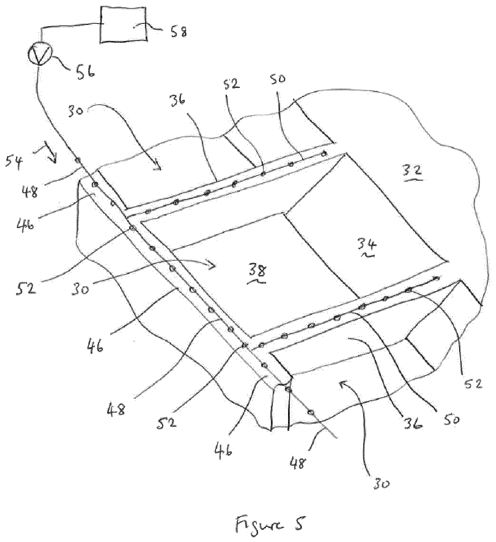

In the embodiment of the storage locations 30 shown in Figure 5 it may be seen that each storage location 30 also has a back wall 46 which extends between the walls 36 for that storage location 30. The back walls 46 are also so dimensioned that the top of the back walls 46 is at around the same vertical level as the vertically uppermost surface of the raised platform 32.

Each storage location 30 includes a storage volume defined by the floor 38, back wall 46, side walls 36 and access ramp 34. The vertically uppermost parts of the back wall 46, side walls 36 and access ramp 34 define an upwardly facing open mouth through which the storage volume can be accessed.

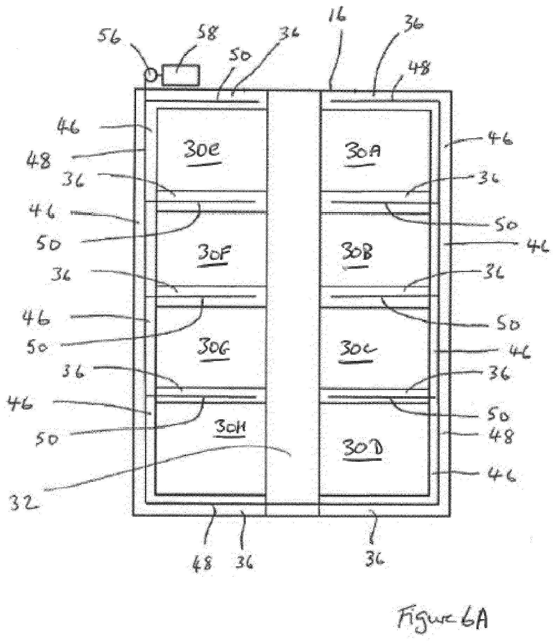

With reference to Figures 5 and 6A, fixed to the top of the back walls 46 and the walls 36 is a treatment composition distribution system. The distribution system is comprised of a treatment composition source 58, a pump 56, a main supply line 48, a number of spur lines 50, and a plurality of nozzles 52 (for clarity, not all of the nozzles 52 are labelled). The main line 48 extends from the treatment composition source 58 and the pump 56. The treatment composition source 58 is in some embodiments a drum containing the treatment composition.

The pump 56 is configured to pressurize the treatment composition within the main supply line 48 and spur lines 50 of the distribution system and to pump the treatment composition along the main line 48 in direction 54.

Distributed along the main supply line 48 and spur lines 50 are a plurality of nozzles 52 (not shown in Figure 6A for clarity). The nozzles 52 are spaced around 30 cm from each other along the length of the main supply line 48 and each spur line 50. The free ends of the main supply line 48 and each of the spur lines 50 are all closed so that the treatment composition can only exit the distribution system through the nozzles 52.

The nozzles 52 are configured to create a fine mist of droplets of treatment composition when the pump 56 is pumping the treatment composition out of the treatment composition source 58 and into the into the main supply line 48. The nozzles 52 are further configured so that the mist of treatment composition they collectively create falls into the storage volume of each of the storage locations 30A to 30H.

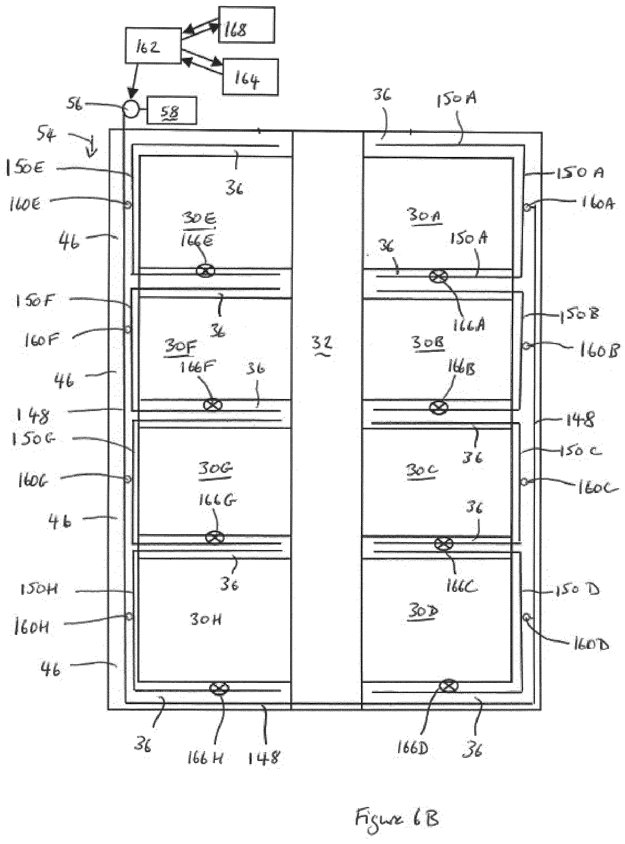

With reference to Figure 6B, a second distribution system is shown. The distribution system is configured to be capable of selectively creating a mist of treatment composition that falls into specific ones of the storage locations 30A to 30H.

Fixed to the top of the back walls 46 and the walls 36 is a treatment composition distribution system. The distribution system is comprised of a treatment composition source 58, a pump 56, a main supply line 148, a number of spur lines 150A to H, and a plurality of nozzles (for clarity, not shown). The treatment composition source 58 is in some embodiments a drum containing the treatment composition.

The main line 148 extends from the treatment composition source 58 and the pump 56, past all of the storage locations 30E, 30F, 30G, 30H, 30D, 30C, 30B and part of 30A to a control valve 160A. Connected to the main line 148 adjacent to storage locations 30E, 30F, 30G, 30H, 30D, 30C, 30B and 30A are control valves 160E, 160F, 160G, 160H, 160D, 160C, 160B and 160A respectively. Control valves 160E, 160F, 160G, 160H, 160D, 160C, 160B and 160A are configured to permit or prevent fluid communication between the supply line 148 and spur lines 150E, 150F, 150G, 150H, 150D, 150C, 150B and 150A respectively.

Each of the spur lines 150E, 150F, 150G, 150H, 150D, 150C, 150B and 150A are U shaped and extend around three sides of the storage volumes of storage locations 30E, 30F, 30G, 30H, 30D, 30C, 30B and 30A respectively. Nozzles are distributed along each of the spur lines 150E, 150F, 150G, 150H, 150D, 150C, 150B and 150A at around 30 cm spacing. The nozzles on a given spur line are so orientated that they direct the spray or mist that they produce towards the storage volume of the storage location with which the spur line is associated.

The free ends of the spur lines 150A to H are all closed so that the treatment composition can only exit the distribution system through the nozzles

The pump 56 is configured to pressurize the treatment composition within the main supply line 148 and spur lines 150A to H that are in fluid communication with the main supply line 148 of the distribution system and to pump the treatment composition along the main line 148 in direction 54. The operation of the pump 56 is controlled by a controller 162.

The control valves 160A to H are all controlled by the controller 162. The controller 162 is in communication with the control valves 160A to H via a long range wide area network (LoRaWAN) 164. In other non-illustrated embodiments other communication systems such as wires may be used.

The controller 162 is also in communication with sensors 166A to H via the LoRaWAN 164. The sensors 166A to H are each associated with storage location 30A to H respectively and measure one or more environmental characteristics such as the concentration of atmospheric ammonia, atmospheric ammonia concentration, concentration of atmospheric carbon dioxide, the concentration of atmospheric methane, humidity, and temperature associated with that storage location.

The controller 162 is, in the present example, configured to follow a preprogramed schedule of operation of the pump 54 and opening and closing control valves 160A to H. That schedule may, however, be modified if signals received from any of the sensors 166A to H indicate an environmental characteristic that is not within a desired range of environmental characteristics.

The controller 162 is also in communication with a user interface unit 168. That interface unit 168 may display information concerning operation treatment composition distribution system and / or the environmental characteristics being measured by the sensors 166A to H.

The interface unit 168 may further include an input device that allows the user to input information and instructions. Those instructions can override any preprogramed schedule that the controller 162 was following.

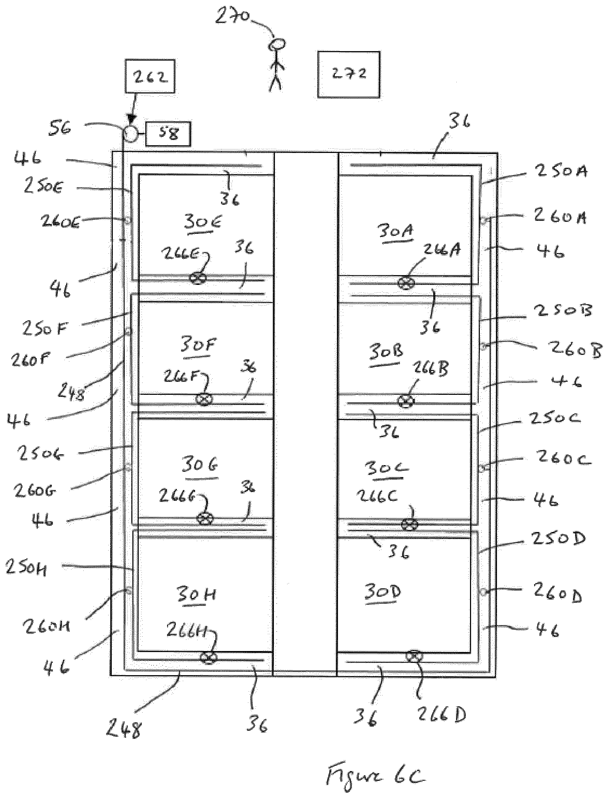

With reference to Figure 6C, a third distribution system is shown. The distribution system is configured to be capable of selectively creating a mist of treatment composition that falls into specific ones of the storage locations 30A to 30H.

Fixed to the top of the back walls 46 and the walls 36 is a treatment composition distribution system. The distribution system is comprised of a treatment composition source 58, a pump 56, a main supply line 248, a number of spur lines 250A to H, and a plurality of nozzles (for clarity, not shown). The treatment composition source 58 is in some embodiments a drum containing the treatment composition.

The main line 248 extends from the treatment composition source 58 and the pump 56, past all of the storage locations 30E, 30F, 30G, 30H, 30D, 30C, 30B and part of 30A to a control valve 260A. Connected to the main line 248 adjacent to storage locations 30E, 30F, 30G, 30H, 30D, 30C, 30B and 30A are control valves 260E, 260F, 260G, 260H, 260D, 260C, 260B and 260A respectively. Control valves 260E, 260F, 260G, 260H, 260D, 260C, 260B and 260A are configured to permit or prevent fluid communication between the supply line 248 and spur lines 250E, 250F, 250G, 250H, 250D, 250C, 250B and 250A respectively.

Each of the spur lines 250E, 250F, 250G, 250H, 250D, 250C, 250B and 250A are U shaped and extend around three sides of the storage volumes of storage locations 30E, 30F, 30G, 30H, 30D, 30C, 30B and 30A respectively. Nozzles are distributed along each of the spur lines 250E, 250F, 250G, 250H, 250D, 250C, 250B and 250A at around 30 cm spacing. The nozzles on a given spur line are so orientated that they direct the spray or mist that they produce towards the storage volume of the storage location with which the spur line is associated.

The free ends of the spur lines 250A to H are all closed so that the treatment composition can only exit the distribution system through the nozzles

The pump 56 is configured to pressurize the treatment composition within the main supply line 248 and spur lines 250A to H that are in fluid communication with the main supply line 248 of the distribution system and to pump the treatment composition along the main line 248 in direction 54. The operation of the pump 56 is controlled by a control unit 262.

The control valves 260A to H may be turned on and off by a user 270.

The control unit 262 is configured to turn the pump 56 on and off at predetermined times. The control unit also includes one or more input devices that the user 270 can use to alter the times for turning the pump 56 on and off and / or allow the user 270 to directly control the pump 56.

The distribution system also includes a number of sensors 266A to H. The sensors 266A to H are associated with storage locations 30A to H respectively and measure one or more environmental characteristics such as the concentration of atmospheric ammonia, atmospheric ammonia concentration, concentration of atmospheric carbon dioxide, the concentration of atmospheric methane, humidity, and temperature associated with that storage location.

The sensors 266A to H are configured to send the measured one or more environmental characteristics to a user interface device 272. The user interface device 272 may be a smart phone, computer, computer tablet or other digital device that will display the measured one or more environmental characteristics to the user 270. The user may use that data to decide whether to cause any change to the treatment of the animal waste or fibrous material via the control unit 262.

An access ramp 34 extends from either side of the longitudinal edges of the vertically uppermost surface of the raised platform 32 to the floor 38 of each of the storage locations 30A to 30H. The ramps 34 are sufficiently shallow that a tractor or digger can travel down the ramp 34 into a storage location 30 if required to do so. This allows mechanical waste handling means to enter the storage locations 30 if that is required.

Supported on the second end wall 20 at a position close to the roof 22 is an extractor 40. Extractor 40 is configured to suck air from the inside of the treatment shed 8. The extractor 40 includes a dehumidifier unit (not shown) that dehumidifies the air extracted from the treatment shed 8. The dehumidifier unit is in fluid communication with a water storage tank 44 via a pipe 42.

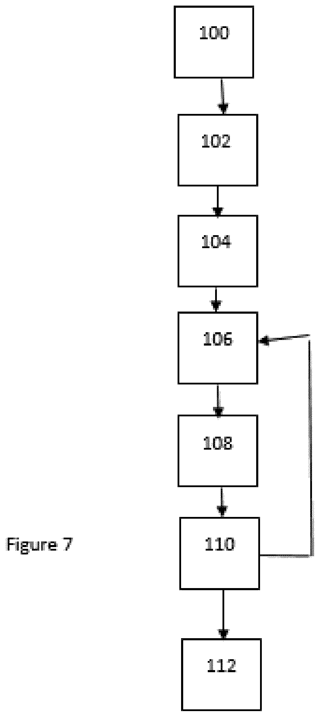

With reference to Figure 7, a flow chart showing an embodiment of the method of the present invention is shown. The performance of the method for one of the storage locations 30 commences with step 100 in which the floor (not shown) of the of the cattle shed 4 is sprayed with the treatment composition. The treatment composition includes a probiotic component and a prebiotic component.

The probiotic component comprises a mixture of *Bacillus subtilis, Bacillus licheniformis, Bacillus megaterium, and Bacillus amyloliquefaciens.* Each of the *Bacillus subtilis, Bacillus licheniformis, Bacillus megaterium,* and *Bacillus amyloliquefaciens* are present in an amount of about 25 wt% (dry weight) of the probiotic component. The absolute quantity of each of the *Bacillus* is such that in the treatment composition the quantity of *Bacillus* or spores in the probiotic component is around 1×10⁸ cfu per gram of the treatment composition.

The prebiotic component is inulin which is present in an amount of about 50 g per kg of treatment composition.

The treatment composition is a solution of the probiotic component and the prebiotic component mixed in water.

The spraying of the treatment composition may be performed using a sprayer carried by a farmer, a sprayer mounted on a machine, or other appropriate spraying apparatus.

The effect of the spraying of the treatment composition on the floor of the cattle shed 4 is that the Bacteria on the probiotic component start to grow on that floor. The growth of the Bacteria is assisted by the prebiotic component of the treatment composition. When the cattle deposit animal waste on the floor the Bacteria start to colonialize that animal waste and starts to treat the animal waste.

In step 102, when the animal waste is to be removed from the floor of the cattle shed 4, for example after the cattle have been in the shed 4 overnight, a scraper mounted on a tractor is used to collect the waste into a specific location such as a receiving chamber and that waste is pumped through one or more pipes to a storage location 30, for example storage location 30A, in the treatment shed 8. Alternatively, the waste may be moved into a suitable transfer means, for example a digger bucket and transported to the treatment shed 8 and deposited into one of the storage locations 30, for example storage location 30A. Other machinery may be used for the handling of the animal waste. The use of that other machinery falls within the scope of the present invention.

The scraping of the animal waste helps mix the Bacteria from the treatment composition into the animal waste.

Once the animal waste has been deposited in the storage volume of the storage location 30A, the Bacteria in the animal waste from the treatment composition continue to act upon the animal waste.

Periodically step 106 is performed. The period may be a set number of hours. Alternatively the period could be determined by a change to the animal waste as a result of the ongoing treatment of the waste, or by environmental characteristics measured in proximity to the waste.

Step 106 is that the pump 54 is activated and thus pumps treatment composition into the main supply line 48 and spur lines 50. The nozzles 52 are caused to generate a mist of the treatment composition. The mist of the treatment composition will fall across each of the storage locations 30A to 30H. This supplies further Bacteria and inulin to the animal waste in each of the storage locations and ensures the continued health and vitality of the Bacteria introduced from the treatment composition. As a result, those Bacteria competitively exclude any pathogenic bacteria that were not introduced from the treatment composition and, those excluded bacteria will, as a result of quorum sensing cease to metabolize and, after a period of time, expire.

Following each performance of step 106, step 108 is performed in connection with at least one of the storage locations 30A to 30H. Step 108 is one in which the animal waste in at least one of the storage locations 30 are aerated. The aeration can be performed using a mechanical means, for example using a digger or a mechanical stirrer built into or temporarily placed into a storage location to agitate the animal waste and thus introduce air / oxygen into the animal waste. Alternatively, the oxygenation may be performed by pumping air into the animal waste via either of pneumatic lines built into the floors 38 of the storage locations 30, or pneumatic nozzles introduced into the animal waste from above the storage locations 30.

Steps 106 and 108 are repeated until a predetermined criteria is achieved. The achievement of that predetermined criteria is determined by a testing step 110. The nature of the testing step 110 is determined by the nature of the predetermined criteria. For example, if the predetermined criteria is the length of time the animal waste has been in the storage location 30 the test is a reference to a record of the date on which the storage location 30 was filled. If the test is the weight of a set volume of the treated animal waste then the test is weighing that volume of treated animal waste.

If the test 110 does not show that the predetermined criteria has been achieved then steps 106 and 108 are repeated. If the test 110 does show that the predetermined criteria has been achieved then step 112 of removing the treated animal waste from the storage location 30 is performed, This might most easily be done with a mechanical digger or similar.

The method of the second aspect of the present disclosure is as described above with the additional step of dewatering the animal waste to produce a liquid and a fibrous material. The fibrous material is then treated in the same fashion as the animal waste as described in connection with Figures 1 to 7.

The mechanical dewatering is performed using an auger or other known mechanical dewatering device suitable for dewatering animal waste.

The liquid produced by the mechanical dewatering of the animal waste may be mixed with the treatment composition as described above. This will have the advantages of mineralizing any organic nitrogen and / or phosphorous and reducing the levels of any pathogenic Bacteria in the liquid. This will result in a liquid that may be used as a liquid fertilizer for the improvement of soil.

The above descriptions are meant to be exemplary only, and one skilled in the art will recognize that changes may be made to the embodiments described without departing from the scope of the disclosure. Still other modifications which fall within the scope of the present disclosure will be apparent to those skilled in the art, in light of a review of this disclosure.

Various aspects of the method and apparatus disclosed in the various embodiments may be used alone, in combination, or in a variety of arrangements not specifically discussed in the embodiments described above. This disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

Statements of invention:
1 A method of treatment of animal waste, in which the method comprises collecting the animal waste, placing the animal waste in a storage location, and periodically or continuously applying a treatment composition to the animal waste, in which the treatment composition comprises a probiotic, and the probiotic comprises at least one non-pathogenic species of Bacteria.
2 A method of manufacture of a fibrous material from animal waste, in which the method comprises collecting the animal waste, mechanically dewatering the animal waste to produce a fibrous material and a liquid, placing the fibrous material in a storage location, and periodically or continuously applying a treatment composition to the fibrous material, in which the treatment composition comprises a probiotic, and the probiotic comprises at least one non-pathogenic species of Bacteria.
3 A method according to statement 1 or 2 in which at least 50%, at least 60%, at least 70%, at least 80%, at least 90%, or 100% of the at least one non-pathogenic species of Bacteria are in the form of spores .
4 A method according to any of statements 1 to 3 in which the at least one non-pathogenic species of Bacteria comprises at least one non-pathogenic species of the genus *Bacillus.*
5 A method according to any of statements 1 to 4 in which the probiotic component comprises one or more of at least one non-pathogenic species of the genus *Bacillus,* Lactic Acid Bacteria, soil Bacteria, water Bacteria, human microbiome Bacteria and plant Bacteria and / or the spores of one or more of at least one non-pathogenic species of the genus *Bacillus,* Lactic Acid Bacteria, soil Bacteria, water Bacteria, human microbiome Bacteria and plant Bacteria.
6 A method according to any of statements 1 to 5 in which the probiotic component comprises at least one non-pathogenic species of the genus *Bacillus* and one or more of *Lactobacillus, Lactococcus, Bifidobacterium, Azospirillum, Enterobacter, Klebsiella, Pseudomonas, Sphingomonas, Nitrospira, Pedomicrobium, Mycobacterium, Nocardia, Desulfovibrio* and Sulfuricurvum.
7 A method according to any of statements 4 to 6 in which the at least one non-pathogenic species of the genus *Bacillus* comprises one or more of *Bacillus subtilis, Bacillus licheniformis, Bacillus megaterium, Bacillus amyloliquefaciens* and *Bacillus pumilus.*
8 A method according to any of statements 1 to 7 in which the treatment composition further comprises a prebiotic component, and the prebiotic component comprises one or more prebiotic compositions.
9 A method according to statement 8 in which the prebiotic component comprises one or more of a fructo-oligosaccharide, a galacto-oligosaccharide and inulin.
10 A method according to any of statements 1 to 9 in which the method further comprises aerating the animal waste or fibrous material.
11 A method according to any of statements 1 to 10 in which the treatment of the animal waste or fibrous material results in generation of water vapour, and the method further comprises capturing at least a part of that water vapour.
12 A method according to any of statements 1 to 11 in which the method further comprises at least one application of the probiotic to the animal waste before the collection of that waste.
13 A method according to any of statements 1 to 12 in which the method further comprises provision of at least one source of drinking water for the animals when they are in the location in which they produce the animal waste, introducing a drinking treatment composition into the drinking water for the animals, the drinking treatment composition comprises a probiotic, and the probiotic comprises at least one non-pathogenic species of Bacteria.
14 A method according to any of statements 1 to 13 in which the animal waste is slurry generated by animals from the Family Bovidae or Suidae.
15 A method according to any of statements 1 to 14 in which the treatment is concluded when the treated animal waste or fibrous material meets a predetermined criteria.
16 A method according to any of statements 1 to 14 in which the method further comprises the provision of a plurality of storage locations, and the animal waste collected or fibrous material produced in a first period is placed in a first storage location, the animal waste collected or fibrous material produced in a second period is placed in a second storage location, and in each subsequent period the animal waste collected or fibrous material produced is placed in a subsequent storage location, and there are sufficient storage locations that when the final storage location is filled the treated animal waste or fibrous material in the first storage location meets a predetermined criteria.
17 A method according to statement 15 or 16 in which the predetermined criteria is one or more of
   the period for which the animal waste or fibrous material has been treated,
   the animal waste or fibrous material has a dry solids content of one of at least 50% by weight (wt%), at least 60 wt%, at least 70 wt%, or at least 80 wt%,
   the mass of a predetermined volume of animal waste or fibrous material is below a predetermined value,
   the reduction of volume of the animal waste or fibrous material relative to its initial volume is one of at least 50%, at least 60% or at least 70%,
   a predetermined reduction in the level of emission of one or both of ammonia and carbon dioxide from the animal waste or fibrous material relative to a measured value at the start of the treatment of the animal waste if treatment of the animal waste started before that waste was placed in a storage location,
   a predetermined reduction in the level of emission of one or both of ammonia and carbon dioxide from the animal waste or fibrous material relative to a measured value when the animal waste or fibrous material is placed in the storage location,
   a predetermined absolute level of emission of one or both of ammonia and carbon dioxide from the animal waste or fibrous material,
   a predetermined level of bioavailability of nitrogen in the treated animal waste or fibrous material, and
   a predetermined level of bioavailability of phosphorus in the treated animal waste or fibrous material.
18 A method according to any of statements 1 to 17 in which the treatment composition is a liquid.
19 A method according to statement 18 in which the treatment composition is formed into at least one spray or mist for application to the animal waste.
20 A method according to statement 19 in which at least one of the at least one spray or mist of the liquid treatment composition has an average droplet size of less than 1000 µm, less than 500 µm, or less than 300 µm.
21 A method according to any of statements 1 to 20 in which the method comprises periodically applying a treatment composition to the animal waste, and the period between each application of the treatment composition is up to 24 hours.
22 A method according to any of statements 1 to 21 in which the treatment is one or more of dewatering the animal waste or fibrous material, fixation of nitrogen in the animal waste or fibrous material, solubilization of phosphorus in the treated waste or fibrous material, and the reduction of pathogenic Bacteria in the animal waste or fibrous material.
23 A method of manufacture of a solid fertilizer for use in increasing the fertility of a plant growth medium, the method comprising treating animal waste or fibrous material according to the method of any of statements 1 to 21.
24 A method of increasing the fertility of a plant growth medium comprising treating animal waste or fibrous material according to the method of any of statements 1 to 21, and applying the treated animal waste or fibrous material to the plant growth medium.
25 A method of manufacture of biomass for the production of heat or electricity comprising treating animal waste or fibrous material according to the method of any of statements 1 to 21, and then burning the treated animal waste or fibrous material.
26 A method of manufacture of animal bedding comprising treating animal waste or fibrous material according to the method of any of statements 1 to 21
27 A treatment structure suitable for the performance of the method according to any of statements 1 to 26 in which the structure comprises one or more storage locations, and a treatment composition distribution system,
   the or each storage location defines a storage volume,
   each storage volume is configured to hold a volume of animal waste or fibrous material, and
   the treatment composition distribution system is configured to distribute treatment composition into the storage volume of the or each storage location on a periodic or continuous basis.
28 A structure according to statement 27 in which the structure comprises two or more storage locations.
29 A structure according to statement 27 or 28 in which each storage location is so configured that the maximum average depth of animal waste or fibrous material that can be held in each storage location is one of up to 100 cm, up to 60 cm, up to 50 cm, up to 40 cm, up to 30 cm, up to 20 cm or up to 10 cm.
30 A structure according to any of statements 26 to 29 in which the structure is an enclosed structure, and optionally the enclosed structure is a building.
31 A structure according to statement 30 in which the enclosed structure comprises an air extraction system.
32 A structure according to statement 31 in which the air extraction system is configured to dehumidify the air extracted from the structure.
33 A structure according to any of statements 27 to 32 in which the treatment composition distribution system comprises at least one spray nozzle, at least one spray nozzle is configured to form a spray of the treatment composition, and at least one spray nozzle is so orientated that spray exiting the spray nozzle travels into the storage volume of at least one of the storage locations.
34 A structure according to any of statements 27 to 33 in which the treatment composition distribution system comprises at least one mist nozzle, at least one mist nozzle is configured to form a mist of the treatment composition.
35 A structure according to statement 34 in which the mist nozzle is configured to produce a mist which has an average droplet size of less than 1000 µm, less than 500 µm, or less than 300 µm.
36 A structure according to any of statements 33 to 35 in which each storage location has a floor, and each nozzle is located vertically less than one of 2.0 m, 1.75 m, 1.5 m, 1.25 m, 1.0 m, 0.75 m or 0.5 m the storage location floor closest to that nozzle.
37 A structure according to statement 28 or any of statements 29 to 36 when dependent on statement 28 in which the treatment composition distribution system is so configured that treatment composition may be independently distributed to the storage locations.
38 A structure according to any of statements 27 to 37 in which the structure further comprises at least one sensor, and each sensor is configured to detect at least one environmental characteristic at the position of the sensor.
39 A structure according to statement 38 in which the at least one environmental characteristic is one or more of atmospheric ammonia concentration, atmospheric carbon dioxide concentration, atmospheric methane concentration, humidity, and temperature.
40 A structure according to statement 38 or 39 in which each sensor is configured to send a signal or message relating to the detected at least one environmental characteristic to a user interface, and optionally the user interface is a mobile telephone or a computer.
41 A structure according to any of statements 27 to 40 in which the structure further comprises a control unit, and the control unit is configured to control the operation of the treatment composition distribution system.
42 A structure according to any of statements 27 to 41 in which the structure further comprises at least one aerator, and at least one aerator is configured to be able to aerate animal waste or fibrous material held in at least one storage volume.
43 A structure according to statement 42 in which at least one aerator is a mechanical means configured to disturb the animal waste or fibrous material in at least one storage volume.
44 A structure according to statement 42 or 43 in which at least one aerator comprises a compressed air supply system and at least one air nozzle that is configured to release air from the compressed air supply system into animal waste or fibrous material in at least one storage location.

## Claims

1. A method of treatment of animal waste, in which the method comprises collecting the animal waste, placing the animal waste in a storage location, and periodically or continuously applying a treatment composition to the animal waste, in which the treatment composition comprises a probiotic, and the probiotic comprises at least one non-pathogenic species of Bacteria.

2. A method of manufacture of a fibrous material from animal waste, in which the method comprises collecting the animal waste, mechanically dewatering the animal waste to produce a fibrous material and a liquid, placing the fibrous material in a storage location, and periodically or continuously applying a treatment composition to the fibrous material, in which the treatment composition comprises a probiotic, and the probiotic comprises at least one non-pathogenic species of Bacteria.

3. A method according to claim 1 in which at least 50%, at least 60%, at least 70%, at least 80%, at least 90%, or 100% of the at least one non-pathogenic species of Bacteria are in the form of spores

4. A method according to any of claims 1 to 3 in which the at least one non-pathogenic species of Bacteria comprises at least one non-pathogenic species of the genus *Bacillus.*

5. A method according to any of claims 1 to 4 in which the probiotic component comprises one or more of at least one non-pathogenic species of the genus *Bacillus,* Lactic Acid Bacteria, soil Bacteria, water Bacteria, human microbiome Bacteria and plant Bacteria and / or the spores of one or more of at least one non-pathogenic species of the genus *Bacillus,* Lactic Acid Bacteria, soil Bacteria, water Bacteria, human microbiome Bacteria and plant Bacteria.

6. A method according to any of claims 1 to 5 in which the treatment composition further comprises a prebiotic component, and the prebiotic component comprises one or more prebiotic compositions, and optionally the prebiotic component comprises one or more of a fructo-oligosaccharide, a galacto-oligosaccharide and inulin.

7. A method according to any of claims 1 to 6 in which the method further comprises aerating the animal waste or fibrous material.

8. A method according to any of claims 1 to 7 in which the treatment of the animal waste or fibrous material results in generation of water vapour, and the method further comprises capturing at least a part of that water vapour.

9. A method according to any of claims 1 to 8 in which the method further comprises at least one application of the probiotic to the animal waste before the collection of that waste.

10. A method according to any of claims 1 to 9 in which the method further comprises provision of at least one source of drinking water for the animals when they are in the location in which they produce the animal waste, introducing a drinking treatment composition into the drinking water for the animals, the drinking treatment composition comprises a probiotic, and the probiotic comprises at least one non-pathogenic species of Bacteria.

11. A method according to any of claims 1 to 10 in which the animal waste is slurry generated by animals from the Family Bovidae or Suidae.

12. A method according to any of claims 1 to 11 in which the treatment is concluded when the treated animal waste or fibrous material meets a predetermined criteria.

13. A method according to any of claims 1 to 12 in which the method further comprises the provision of a plurality of storage locations, and the animal waste collected or fibrous material produced in a first period is placed in a first storage location, the animal waste collected or fibrous material produced in a second period is placed in a second storage location, and in each subsequent period the animal waste collected or fibrous material produced is placed in a subsequent storage location, and there are sufficient storage locations that when the final storage location is filled the treated animal waste or fibrous material in the first storage location meets a predetermined criteria.

14. A method according to claim 12 or 13 in which the predetermined criteria is one or more of
the period for which the animal waste or fibrous material has been treated,
the animal waste or fibrous material has a dry solids content of one of at least 50% by weight (wt%), at least 60 wt%, at least 70 wt%, or at least 80 wt%,
the mass of a predetermined volume of animal waste or fibrous material is below a predetermined value,
the reduction of volume of the animal waste or fibrous material relative to its initial volume is one of at least 50%, at least 60% or at least 70%,
a predetermined reduction in the level of emission of one or both of ammonia and carbon dioxide from the animal waste or fibrous material relative to a measured value at the start of the treatment of the animal waste if treatment of the animal waste started before that waste was placed in a storage location,
a predetermined reduction in the level of emission of one or both of ammonia and carbon dioxide from the animal waste or fibrous material relative to a measured value when the animal waste or fibrous material is placed in the storage location,
a predetermined absolute level of emission of one or both of ammonia and carbon dioxide from the animal waste or fibrous material,
a predetermined level of bioavailability of nitrogen in the treated animal waste or fibrous material, and
a predetermined level of bioavailability of phosphorus in the treated animal waste or fibrous material.

15. A method according to any of claims 1 to 14 in which the treatment is one or more of dewatering the animal waste or fibrous material, fixation of nitrogen in the animal waste or fibrous material, solubilization of phosphorus in the treated waste or fibrous material, and the reduction of pathogenic Bacteria in the animal waste or fibrous material.
